# EUROPÄISCHE PATENTANMELDUNG

(11) **EP 0 897 746 A1**
(43) Veröffentlichungstag der Anmeldung: **24.02.1999**
(21) Anmeldenummer: 98114935.4
(22) Anmeldetag: 07.08.1998
(51) Int. Cl.: B01J 8/02, B01D 53/04

(54) **Reaktor für chemische Reaktionen, insbesondere für adsorptive Trennverfahren**

(30) Priorität: 14.08.1997 DE 19735389
(71) Anmelder: Linde Aktiengesellschaft, 65189 Wiesbaden (DE)
(72) Erfinder: Wiessner, Frank Dipl.-Ing., 81241 München (DE); Leitgeb, Paul Dr. Dipl.-Ing., 82049 Pullach (DE); Hutter, Rudolf, 82223 Eichenau (DE); Hönig, Christian Dipl.-Ing., 81377 München (DE)

(57) **Zusammenfassung**

Die Erfindung betrifft einen Reaktor für chemische Reaktionen, insbesondere für adsorptive Trennverfahren, der im wesentlichen zylindersymmetrisch um eine im wesentlichen vertikal verlaufende Achse (1) aufgebaut ist, einen Mantel (2) und innerhalb des Mantels (2) ein Bett (3) aufweist, welches mit wenigstens einem rieselfähigem Material gefüllt ist und durch einen inneren (4) und einen äußeren Korb (5) sowie an seiner Unterseite durch einen Boden (6) begrenzt ist, und bei dem sowohl zwischen dem äußeren Korb (5) und dem Mantel (2) als auch innerhalb des inneren Korbes (4) Gaszuführ- bzw. Gasabführbereiche ausgebildet sind, wobei das Bett (3) über nahezu seine gesamte Länge ringförmig und in seinem oberen Bereich (B) haubenförmig ausgebildet ist.

Erfindungsgemäß ist in dem innerhalb des inneren Korbes (4) ausgebildeten Gaszuführ- bzw. Gasabführbereich wenigstens ein Verdrängungskörper (18) angeordnet ist.

Die Erfindung betrifft ferner die Verwendung eines derartigen Reaktors für adsorptive Trennverfahren, insbesondere für die adsorptive Abtrennung von Stickstoff aus einem Stickstoff enthaltenden Gasgemisch, wie z. B. Luft, oder für die adsorptive Abtrennung von Kohlendioxid aus einem Kohlendioxid enthaltenden Gasgemisch, insbesondere aus einem Reduktionsabgas.

## Beschreibung

Die Erfindung betrifft einen Reaktor für chemische Reaktionen, insbesondere für adsorptive Trennverfahren, der im wesentlichen zylindersymmetrisch um eine im wesentlichen vertikal verlaufende Achse aufgebaut ist, einen Mantel und innerhalb des Mantels ein Bett aufweist, welches mit wenigstens einem rieselfähigen Material gefüllt ist und durch einen inneren und einen äußeren Korb sowie an seiner Unterseite durch einen Boden begrenzt ist, und bei dem sowohl zwischen dem äußeren Korb und dem Mantel als auch innerhalb des inneren Korbes Gaszuführ- bzw. Gasabführbereiche ausgebildet sind, wobei das Bett über nahezu seine gesamte Länge ringförmig und in seinem oberen Bereich haubenförmig ausgebildet ist.

Ferner betrifft die Erfindung die Verwendung eines Reaktors für adsorptive Reaktionen.

Ein Reaktor der eingangs beschriebenen Gattung ist z. B. aus der DE-OS 27 42 752 bekannt. Hierbei wird der in der genannten Offenlegungsschrift beschriebene Reaktor jedoch lediglich für chemische Reaktionen verwendet. Für Reaktoren gemäß dem Oberbegriff des Anspruches 1 besteht ein weiter Anwendungsbereich. Sie können für die verschiedensten Reaktionen zwischen einem Gas und einem aktiven Material, welches in rieselfähiger Form vorliegt, eingesetzt werden. Das aktive Material kann bspw. ein Adsorbens oder ein Katalysator sein.

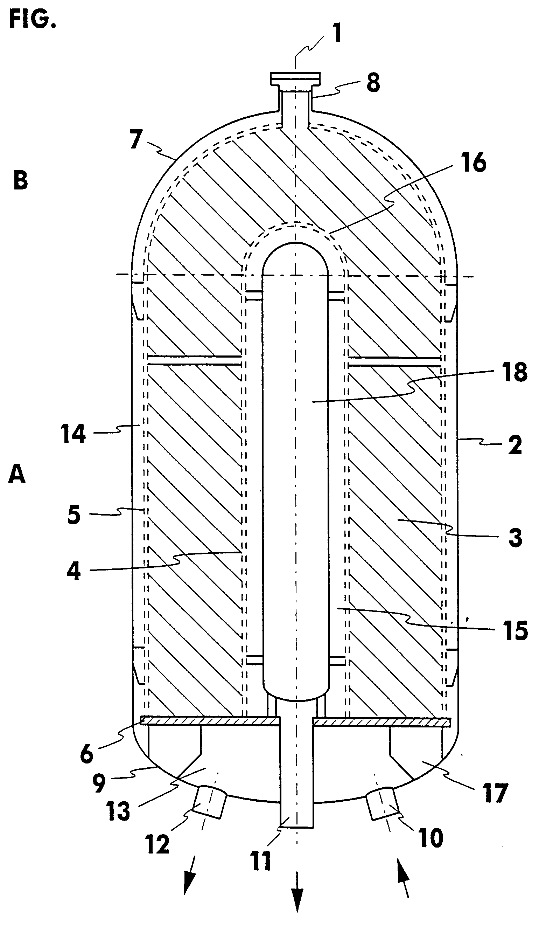

Die Schüttung eines derartigen Reaktors weist eine Form auf, die die Verwendung von Einrichtungen zur Kompensation der Setzungserscheinungen der Schüttung überflüssig macht. Dies wird dadurch erreicht, daß die Schüttung - wie in der Figur dargestellt - über nahezu ihre gesamte Länge ringförmig ausgebildet ist (Bereich A), während sie in ihrem oberen Bereich eine haubenförmige Form aufweist (Bereich B).

Während der Reaktionsphase wird ein Reaktionsgas durch das mit aktivem, rieselfähigem Material gefüllte Bett geführt, in dem es bspw. dem Raum zwischen Reaktormantel und äußeren Korb zugeleitet und von dem Raum innerhalb des inneren Korbes wieder abgezogen wird. Selbstverständlich kann die Strömungsrichtung auch umgekehrt verlaufen; in diesem Falle wird das Reaktionsgas zunächst dem Raum innerhalb des inneren Korbes zugeführt, gelangt nach Durchgang durch das Bett in den Raum zwischen Reaktormantel und äußeren Korb und wird aus diesem Raum abgezogen.

Im Falle einer Verwendung eines derartigen Reaktors für ein adsorptives Trennverfahren ist zu berücksichtigen, daß die Adsorptionsfähigkeit des aktiven Materials, des Adsorbens, mit zunehmender Beladungsdauer abnimmt. Daher ist das Adsorbens in regelmäßigen Zeitabständen zu regenerieren. Hierbei wird während der Regenerierphase der Druck abgesenkt und/oder ein Regeneriergas, das gegenüber dem zu reinigenden Reaktions- bzw. Einsatzgas eine andere chemische Zusammensetzung und/oder einen anderen thermodynamischen Zustand aufweist, durch die Schüttung aus aktiven Material geleitet.

Eine wie in der o.g. DE-OS 27 42 752 beschriebene Reaktorkonstruktion weist ein sog. Zentralrohr - damit ist der als Gaszuführ- bzw. Gasabführbereich ausgebildete Raum innerhalb des inneren Korbes gemeint - auf, wodurch ein vergleichsweise großes, nicht mit aktivem Material gefülltes Volumen innerhalb des Reaktors gebildet wird. Dieses Volumen führt jedoch bei adsorptiven Trennverfahren während der Regenerierphase zu erhöhten Gas- bzw. Produktverlusten und damit zu einer schlechteren Ausbeute, und bei bestimmten Verfahren, wie bspw. der Luftzerlegung, zu einer Erhöhung des spezifischen Energiebedarfs.

Der Erfindung liegt daher die Aufgabe zugrunde, einen Reaktor der eingangs genannten Art anzugeben, der die genannten Nachteile vermeidet.

Dies wird erfindungsgemäß dadurch erreicht, daß in dem innerhalb des inneren Korbes ausgebildeten Gaszuführ- bzw. Gasabführbereich wenigstens ein Verdrängungskörper angeordnet ist.

Gemäß einer vorteilhaften Ausgestaltung des erfindungsgemäßen Reaktors ist der Verdrängungskörper im wesentlichen zylindersymmetrisch aufgebaut.

Die Erfindung sowie weitere Ausgestaltungen davon, die Gegenstände von Unteransprüchen darstellen, seien anhand der Figur näher erläutert. Figur zeigt den prinzipiellen Aufbau der beispielhaften Ausführungsform des erfindungsgemäßen Reaktors mit seinen wesentlichen Merkmalen. Die Darstellung ist der Einfachheit halber schematisch ausgeführt; insbesondere entsprechen die Verhältnisse zwischen den äußeren Abmessungen des Reaktors und den Materialdicken nicht den wirklichen Maßen.

Der erfindungsgemäße Reaktor ist im wesentlichen zylindersymmetrisch um eine vertikale Achse 1 aufgebaut. Er wird nach außen durch einen Mantel 2, welcher eine obere 7 und eine untere Kalotte 9 aufweist, begrenzt. In der unteren Kalotte 9 sind Eintritts- 10 und Austrittsöffnungen 11 und 12 für das Einsatzgas(gemisch) sowie für das oder die aus dem zu reinigenden Gas abgetrennten Komponenten bzw. für das umgesetzte Gas(gemisch) vorgesehen. Die obere Kalotte 7 ist von einem Mannloch 8 zum Befüllen und/oder Absaugen von rieselfähigem Material durchbrochen.

Im Inneren des Reaktors ist das Adsorptions- bzw. Katalysatorbett 3, welches durch einen inneren 4 und einen äußern Korb 5 begrenzt ist, angeordnet. Das Adsorptions- bzw. Katalysatorbett 3 wird nach unten hin durch den Boden 6 abgeschlossen, welcher sich - gemäß einer Ausgestaltung des erfindungsgemäßen Reaktors - über im Regelfall sternförmig angeordnete Rippen 17 an der unteren Kalotte 9 des Mantels 2 abstützt. Die Körbe 4 und 5 sind aus zum größten Teil gelochtem Blech, welches mit Drahtgewebe abgedeckt ist, gefertigt.

Das zu reinigende bzw. umzusetzende Gas, bspw. Luft, strömt über die Einlaßöffnung 10 in den unteren Bereich 13 des Reaktors ein und wird durch die Unterseite des Bodens 6 in den durch den Mantel 2 und den äußeren Korb 5 gebildeten Ringraum 14 umgelenkt. Von diesem strömt das Gas mit einer radialen Komponente durch das Adsorptionsbett 3 in den Ringspalt 15, der durch den inneren Korb 4 und den Verdrängungskörper 18 gebildet wird. Wie bereits erwähnt und in der Figur dargestellt, ist der Verdrängungskörper 18 im wesentlichen zylindersymmetrisch aufgebaut. Prinzipiell kann der Verdrängungskörper 18 nahezu jede beliebige Form, die zumindest noch ein Strömen des Gases zuläßt, aufweisen. Um ein optimales Strömen des Gases zu erreichen, kann sich der Verdrängungskörper 18 insbesondere auch konisch nach unten verjüngen. Das in den Ringspalt 15 eingeströmte, gereinigte bzw. umgesetzte Gas wird anschließend über die Auslaßöffnung 11 aus dem Reaktor abgezogen.

Durch die Anordnung des Verdrängungskörpers 18 in dem innerhalb des inneren Korbes 4 ausgebildeten Gaszuführ- bzw. Gasabführbereich wird das bei der Reaktorkonstruktion gemäß der genannten DE-OS 27 42 752 nicht mit aktivem Material gefüllte Volumen innerhalb des Reaktors deutlich verkleinert. Diese "Volumenverkleinerung" führt während der Regenerierphase zu einer Verringerung der Gas- bzw. Produktverluste und damit zu einer Verbesserung der Ausbeute bzw. zu einer Verringerung des spezifischen Energiebedarfs.

Bei Adsorptionsverfahren wird in letzter Zeit zunehmend zu kürzeren Zyklenzeiten (Adsorption/Desorption) übergegangen, womit entsprechend höhere Gasströmungsgeschwindigkeiten verbunden sind. Die daraus resultierenden Nachteile können ebenfalls mittels des erfindungsgemäßen Reaktors gelöst bzw. deutlich verringert werden. Beim Übergang zu kürzeren Zyklenzeiten erhöhen sich die zeitlichen Gasdurchsätze entsprechend. Dadurch erhöht sich insbesondere bei einem kleinen Durchmesser des Innenkorbes die Gasströmungsgeschwindigkeit entsprechend. Dies kann zu einer erhöhten mechanischen Belastung für das aktive Schüttgut führen. Dieser verfahrenstechnische Nachteil kann wirkungsvoll durch Vergrößern der Anströmfläche, d. h. durch einen größeren Durchmesser des Innenkorbes, behoben werden. Das damit verbundene größere Volumen wird durch den Verdrängungskörper 18 wieder auf das erwünschte Maß reduziert.

Gemäß einer vorteilhaften Ausgestaltung des erfindungsgemäßen Reaktors weist das Bett 3 in ein am Scheitelpunkt der oberen Kalotte 7 angeordnetes Mannloch 8 hinein. Derjenige Teil des Reaktions- bzw. Adsorptionsbettes 3, der in dieses Mannloch 8 hineinreicht, nimmt zu Beginn der Adsorptions- bzw. Reaktionstätigkeit an der zwischen Einsatzgas und Reaktions- bzw. Adsorptionsbett 3 stattfindenden Reaktion nicht teil. Da jedoch die unerwünschten Setzungserscheinungen des Reaktions- bzw. Adsorptionsbettes 3 unmittelbar nach der (Erst)Inbetriebnahme des Reaktors, z. B. nach einer erfolgten Neubefüllung des Reaktors mit Reaktors- bzw. Adsorptionsmaterial, erfolgen, sinkt der in das Mannloch 8 hineinreichende Teil des Bettes im Verlaufe der Setzungserscheinungen nach unten. Der nachsinkende Teil des Reaktions- bzw. Adsorptionsbettes füllt dadurch die durch die Setzung frei werdenden Räume innerhalb des Bettes 3 auf.

Bei den adsorptiven Trennverfahren wird während der Desorptionsphase die am Adsorbens adsorbierte Komponente durch Druckabsenkung bzw. unter Zuhilfenahme einer Vakuumpumpe über den Ringraum 14, den unteren Bereich des Reaktors 13 sowie der Austrittsöffnung 12 aus dem Reaktor abgezogen.

Selbstverständlich kann anstelle der in der Figur dargestellten Ein- 10 und Austrittsöffnung 12 lediglich eine Öffnung, die sowohl als Ein- als auch als Austrittsöffnung dient, vorgesehen sein.

Den erfindungsgemäßen Reaktor weiterbildend wird vorgeschlagen, daß der Abschluß des innerhalb des inneren Korbes (4) ausgebildeten Gaszuführ- bzw. Gasabführbereiches haubenförmig (16) ausgebildet ist. Dadurch wird eine optimale Gasführung in diesem Bereich gewährleistet.

Der erfindungsgemäße Reaktor eignet sich, wie bereits erwähnt, für adsorptive Trennverfahren.

Insbesondere eignet er sich für die adsorptive Abtrennung von Stickstoff aus einem Stickstoff enthaltenden Gasgemisch, insbesondere aus Luft, oder für die adsorptive Abtrennung von Kohlendioxid aus einem Kohlendioxid enthaltenden Gasgemisch, insbesondere aus einem Reduktionsabgas.

Prinzipiell ist der erfindungsgemäße Reaktor für jede beliebige adsorptive Abtrennung einer oder mehrerer Komponenten aus einem mehrkomponentigen (Gas-)Gemisch bzw. für die Auftrennung eines mehrkomponentigen (Gas-)Gemisches vorteilhaft einsetzbar.

## Patentansprüche

1. Reaktor für chemische Reaktionen, insbesondere für adsorptive Trennverfahren, der im wesentlichen zylindersymmetrisch um eine im wesentlichen vertikal verlaufende Achse aufgebaut ist, einen Mantel und innerhalb des Mantels ein Bett aufweist, welches mit wenigstens einem rieselfähigem Material gefüllt ist und durch einen inneren und einen äußeren Korb sowie an seiner Unterseite durch einen Boden begrenzt ist, und bei dem sowohl zwischen dem äußeren Korb und dem Mantel als auch innerhalb des inneren Korbes Gaszuführ- bzw. Gasabführbereiche ausgebildet sind, wobei das Bett über nahezu seine gesamte Länge ringförmig und in seinem oberen Bereich haubenförmig ausgebildet ist, **dadurch gekennzeichnet**, daß in dem innerhalb des inneren Korbes (4) ausgebildeten Gaszuführ- bzw. Gasabführbereich wenigstens ein Verdrängungskörper (18) angeordnet ist.

2. Reaktor nach Anspruch 1, dadurch gekennzeichnet, daß der Verdrängungskörper (18) im wesentlichen zylindersymmetrisch aufgebaut ist.

3. Reaktor nach Anspruch 1 oder 2, dadurch gekennzeichnet, daß der Verdrängungskörper (18) konisch nach unten verjüngend ausgebildet ist.

4. Reaktor nach einem der vorhergehenden Ansprüche, dadurch gekennzeichnet, daß der Abschluß des innerhalb des inneren Korbes (4) ausgebildeten Gaszuführ. bzw. Gasabführ-bereiches (15) haubenförmig (16) ausgebildet ist.

5. Reaktor nach einem der vorhergehenden Ansprüche, dadurch gekennzeichnet, daß der haubenförmig ausgebildete Bereich (B) des Bettes (3) in ein am Scheitelpunkt der oberen Kalotte (7) angeordnetes Mannloch (8) hineinreicht.

6. Reaktor nach einem der vorhergehenden Ansprüche, dadurch gekennzeichnet, daß sich der Boden (6) am unteren Bereich des Mantels (2) abstützt.

7. Verwendung eines Reaktors nach einem der vorhergehenden Ansprüche für adsorptive Trennverfahren.

8. Verwendung eines Reaktors nach einem der vorhergehenden Ansprüche für die adsorptive Abtrennung von Stickstoff aus einem Stickstoff enthaltenden Gasgemisch, insbesondere aus Luft.

9. Verwendung eines Reaktors nach einem der vorhergehenden Ansprüche für die adsorptive Abtrennung von Kohlendioxid aus einem Kohlendioxid enthaltenden Gasgemisch, insbesondere aus einem Reduktionsabgas.
